# FASCICULE DE BREVET EUROPEEN

(11) **EP 1 169 210 B1**
(45) Date de publication et mention de la délivrance du brevet: **27.08.2003**
(21) Numéro de dépôt: 00917168.7
(22) Date de dépôt: 07.04.2000
(51) Int. Cl.: B62D 9/02, B62K 5/04

(54) **VEHICULE A PENDULARITE VARIABLE GUIDEE**
FAHRZEUG MIT GEFÜHRTER, VARIABLER PENDELUNG
VEHICLE WITH VARIABLE GUIDED PENDULAR MOTION

(30) Priorité: 14.04.1999 FR 9904849
(43) Date de publication de la demande: 09.01.2002
(73) Titulaire: Minot, Jean-Phillippe, 74290 Veyrier du Lac (FR)
(72) Inventeur: Minot, Jean-Phillippe, 74290 Veyrier du Lac (FR)
(74) Mandataire: Gasquet, Denis
(86) Numéro de dépôt international: FR0000903
(87) Numéro de publication internationale: WO00061423

(56) Documents cités:
- FR-A- 2 752 213
- US-A- 4 993 733

## Description

La présente invention concerne un perfectionnement pour les véhicules roulants tels que les tricycles ou les automobiles, par exemple. Elle concerne plus particulièrement la liaison entre le châssis du véhicule et son ensemble de direction.

Le véhicule quatre roues traditionnel était à l'origine la berline. Depuis l'élaboration des gammes et les besoins spécifiques des utilisateurs a donné lieu à la mise au point d'une grande variété de véhicules spécialisés. Ainsi, les véhicules roulants développés par les industriels, tels que les voitures sont généralement construits spécifiquement pour l'utilisation qu'en fait l'usager, certains étant adaptés à la conduite en ville et présentant une grande maniabilité, tandis que d'autres sont adaptés à la conduite routière et présentent des comportements remarquables à grande vitesse, d'autres encore sont destinés à la conduite dans les terrains accidentés ou à la conduite sportive. Dans le même temps, le marché du deux roues n'a pas connu la même diversification fonctionnelle et s'est cantonné sur le marché du loisir.

Les constructeurs ont été amenés à décliner tous les volumes possibles sur les châssis à quatre roues. Toutefois, les contraintes dynamiques les ont empêché jusqu'à maintenant de développer des véhicules étroits, dans des conditions conformes aux règles de sécurité, ,d'ergonomie et de confort.

De même, les véhicules traditionnels sont généralement de conception très spécifique et sont adaptés à une utilisation précise. Aussi, ces véhicules présentent des inconvénients liés à leur manque de polyvalence et à leur inadaptation aux différents styles de conduite et aux différentes conditions d'utilisation. Les véhicules étroits souffrent le plus souvent d'une mauvaise maniabilité ou d'une tenue de route médiocre dans certaines plages de vitesses, et dans certains virages.

Certains fabricants ou inventeurs ont tenté de remédier à ces problèmes et ont conçus des véhicules de conception particulière comme par exemple ceux décrits dans les brevets EP 0606191 et FR 96 10290. Toutefois, malgré le bon comportement de ces véhicules, ils ne sont pas encore suffisamment adaptés aux besoins actuels.

Un véhicule analogue et tel que décrit par le préambule de la revendication 1 est connu du document US-A-4 993 733.

La présente invention a pour objectif de résoudre les inconvénients précités à l'aide de moyens simples, fiables, économiques, adaptables et peu onéreux. Elle permet la mise au point de véhicules légers, maniables et polyvalents, susceptibles de s'adapter à tous les types de conduite.

Ainsi, selon sa caractéristique principale, le véhicule de l'invention est tel que décrit par la revendication 1.

Selon une autre caractéristique du véhicule de l'invention, les moyens d'inclinaison permettent l'inclinaison de l'axe de rotation vers le haut et vers l'avant si l'ensemble de direction est disposé à l'avant et vers le haut, et vers l'arrière, si l'ensemble de direction est disposé à l'arrière.

Selon une caractéristique complémentaire du véhicule de l'invention, celui-ci est caractérisé en ce que les moyens d'inclinaison permettent l'inclinaison de l'axe de rotation pendant le déplacement du véhicule.

Selon une caractéristique complémentaire du véhicule de l'invention, celui-ci est caractérisé en ce que l'axe de rotation est formé par un arbre de pivotement solidaire de l'ensemble de direction et en ce que les moyens d'inclinaison comportent un palier de renvoi dans lequel pivote l'arbre de pivotement, ledit palier étant porté par un bras de commande articulé en rotation sur le châssis porteur autour de l'axe de rotation transversal.

Selon une autre caractéristique du véhicule de l'invention, celui-ci comporte un organe de guidage qui commande en rotation une colonne de direction articulée sur l'arbre de pivotement par l'articulation de manière à pouvoir lui transmettre un couple de pivotement par rapport au châssis.

Selon le mode de réalisation préféré du véhicule de l'invention, les moyens de commande sont constitués par au moins un vérin disposé entre le châssis et le bras de commande ou son palier de renvoi.

Selon une caractéristique complémentaire du véhicule de l'invention, les moyens de commande comportent des moyens d'adaptation destinés à déterminer l'angle d'inclinaison optimum de l'axe de rotation en fonction des paramètres techniques du véhicule et/ou de son environnement.

Selon le mode de réalisation préféré du véhicule de l'invention, l'angle d'inclinaison de l'axe de rotation par rapport à la verticale est déterminé par les moyens d'adaptation en fonction de la vitesse du véhicule, l'angle d'inclinaison augmentant lorsque la vitesse du véhicule augmente.

D'autres caractéristiques et avantages de l'invention se dégageront de la description qui va suivre en regard des dessins annexés qui ne sont donnés qu'à titre d'exemples non limitatifs.

Les figures 1 à 5 illustrent le mode de réalisation préféré du véhicule de l'invention et une de ses variantes d'exécution.

La figure 1 illustre en vue latérale le véhicule et son arbre de pivotement en position sensiblement verticale.

La figure 2 représente en coupe transversale selon AA le véhicule et son arbre de pivotement en position sensiblement verticale.

La figure 3 représente selon une vue similaire à la figure 1 le véhicule et son arbre en position sensiblement inclinée.

La figure 4 représente selon une vue similaire à la figure 2 le véhicule et son arbre en position sensiblement inclinée.

La figure 5 illustre selon une vue similaire à la figure 2 une variante d'exécution du véhicule de l'invention.

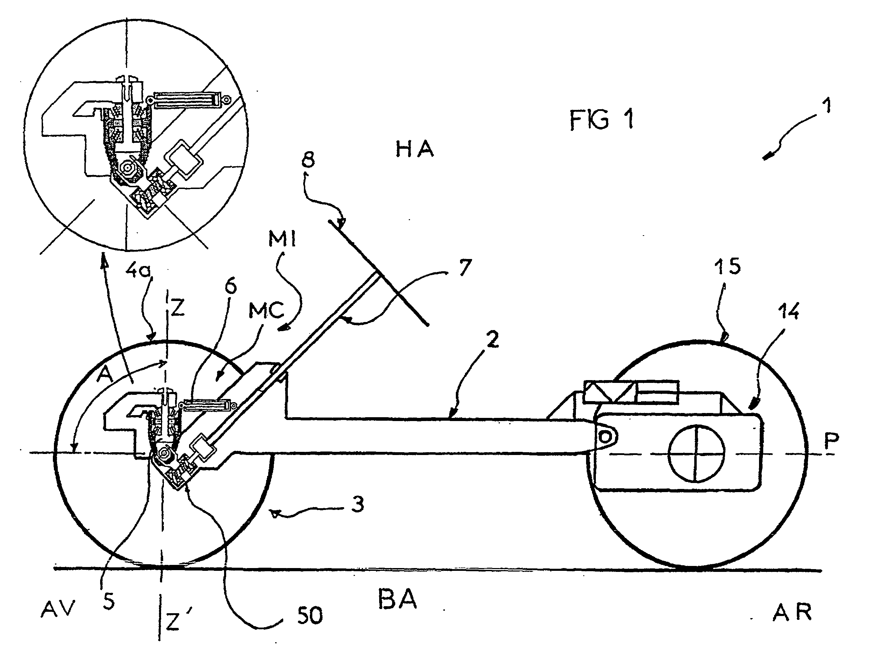

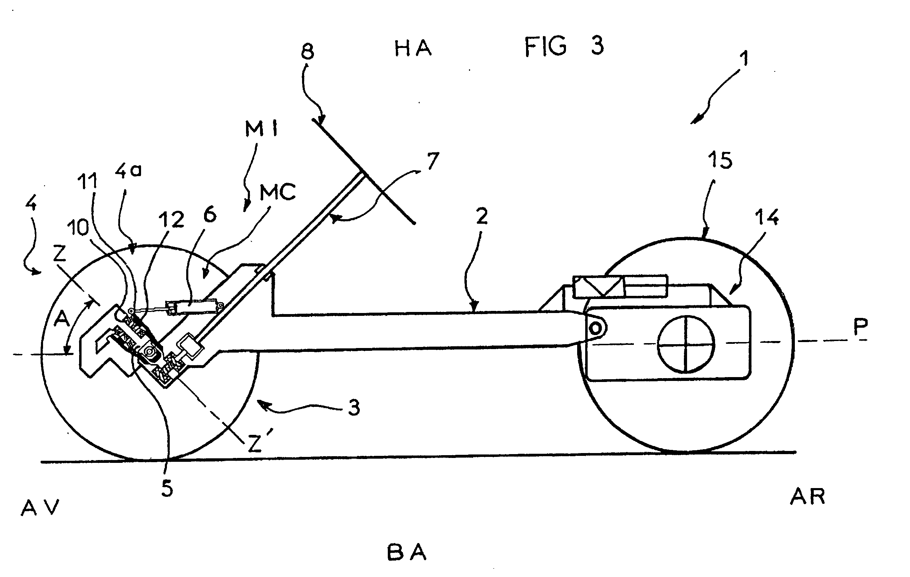

Selon l'invention, le véhicule, portant la référence générale (1), est un véhicule de type roulant. Il comporte de manière connue en soi un châssis porteur (2) articulé autour d'un axe d'articulation (ZZ') sur un ensemble de direction (3) comportant au moins deux roues directrices (4a, 4b). Notons que l'ensemble de direction (3) peut avantageusement être disposé à l'avant (AV) du véhicule (1), comme le montrent les figures 1 et 3. Toutefois, il pourrait en être autrement et l'ensemble de direction pourrait être disposé à l'arrière, sans pour autant sortir du champ de protection de l'invention.

De même, selon une variante d'exécution non illustrée, le véhicule pourrait présenter deux ensembles de direction complémentaires, l'un à l'avant, et l'autre à l'arrière, lesdits ensembles étant destinés à coopérer ensemble pour diriger le véhicule.

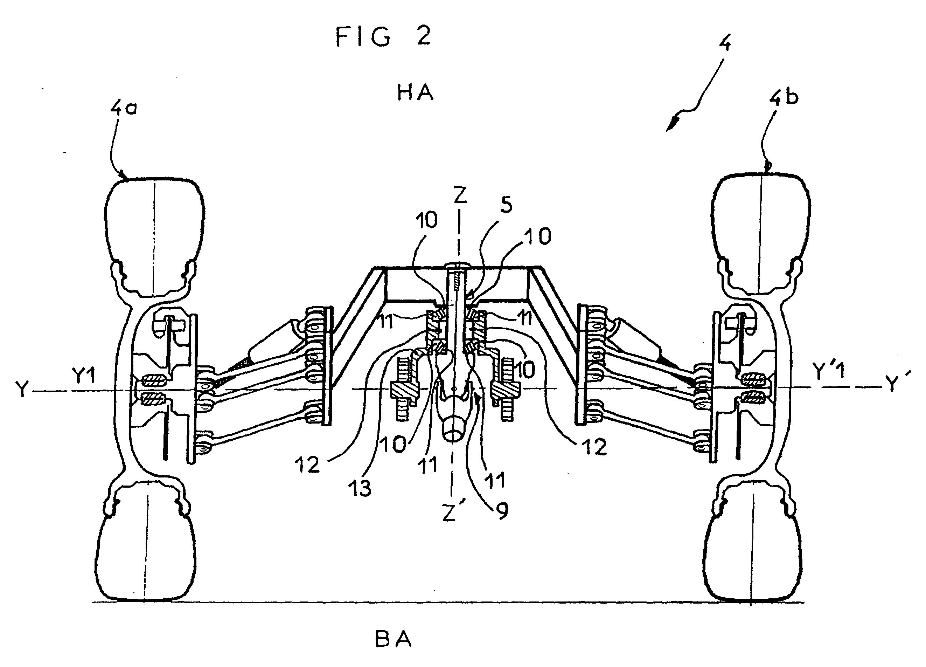

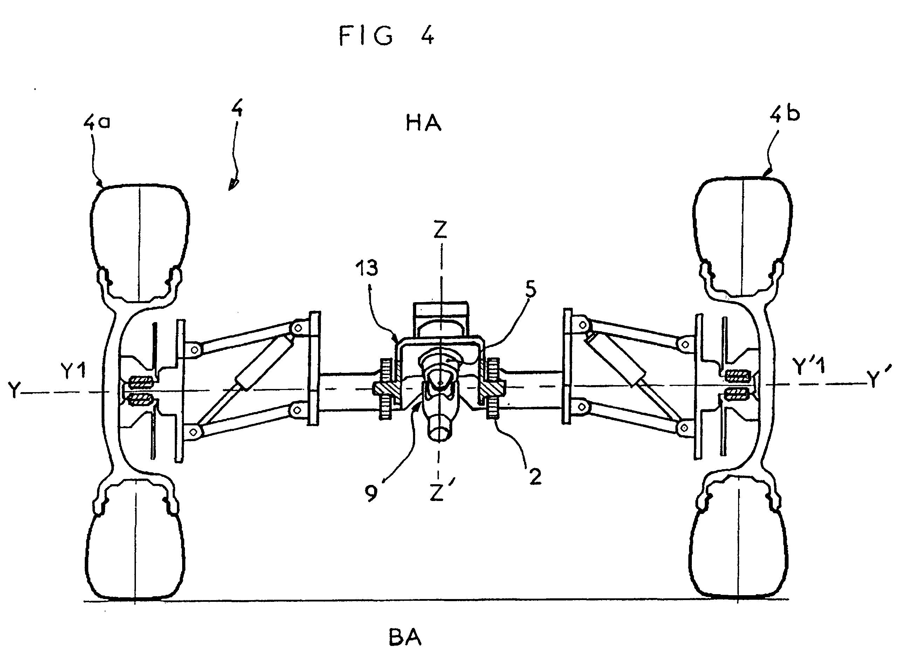

Selon le mode de réalisation préféré illustré figures 1 à 4, l'ensemble de direction (3) est monté à l'avant (AV) du véhicule (1). Il comporte deux roues directrices (4a, 4b) montées sur un train avant (4) disposé pivotant par rapport au châssis (2) autour de l'axe de rotation (ZZ'), comme le montrent les figures 2 et 4. Selon l'invention, le véhicule (1) comporte des moyens d'inclinaison (MI) destinés à permettre l'inclinaison de l'axe de rotation (ZZ') autour duquel s'effectue le pivotement respectif de l'ensemble de direction (3) et du châssis (2). Ces moyens d'inclinaison (MI) sont avantageusement commandés par des moyens de commande (MC) qui permettent de gérer l'inclinaison de l'axe (ZZ'), c'est-à-dire l'angle (A) que l'axe de rotation (ZZ') présente avec la verticale.

Selon le mode de réalisation préféré du véhicule (1) de l'invention, l'axe de rotation (ZZ') disposé entre le châssis (2) et le train avant (4) qui forme l'ensemble de direction (3) est matérialisé par un arbre de pivotement (5). Cet arbre de pivotement peut présenter un angle d'inclinaison (A) compris entre 0 et 90°, c'est-à-dire compris entre une position inactive illustrée figure 1 où l'arbre de pivotement (5) est disposé verticalement et une position extrême non illustrée où l'arbre présente une inclinaison (A) sensiblement égale à 90° et se trouve ainsi dans un plan horizontal parallèle au sol. Toutefois, selon le mode de réalisation préféré, l'angle d'inclinaison varie préférentiellement dans la plage comprise entre 0 et 45°.

Selon l'invention, les moyens de commande (MC) comportent des moyens d'adaptation susceptibles de déterminer l'angle d'inclinaison optimum (A) de l'arbre de pivotement (5) en fonction des paramètres techniques liés au véhicule et à ses conditions d'utilisation, et ce afin de conférer au véhicule un comportement agréable et maniable ainsi qu'une bonne tenue de route quelles que soient ses conditions d'utilisation.

Selon le mode de réalisation illustré, l'arbre de pivotement (5) de l'ensemble de direction avant (3) s'incline vers le haut (HA) et vers l'avant (AV). Il va de soi que dans le cas d'un ensemble de direction arrière, l'axe de pivotement (5) s'orienterait inversement vers le haut (HA) et vers l'arrière (AR). Les moyens d'inclinaison (MI) comportent des moyens de commande (MC), tel qu'un vérin (6), destinés à faire pivoter l'arbre (5) dans le plan de symétrie générale (P) du châssis (2) autour d'un axe de rotation transversal (YY') vers le haut et vers l'avant. Notons que, selon le mode de réalisation préféré du véhicule de l'invention, cet axe de rotation transversal (YY') de l'arbre de pivotement (5) est disposé sensiblement dans l'axe des roues (Y1Y'1) du train avant ou au voisinage de celui-ci.

Selon le premier mode de réalisation du véhicule (1) de l'invention, celui-ci comporte une colonne de direction (7) solidaire d'un organe de guidage (8) comme, par exemple, un volant ou un guidon et susceptible de transmettre un couple de pivotement à l'arbre (5) et donc au train avant (4). Notons que l'arbre de pivotement (5) est relié à la direction (7) par un dispositif de transmission et de renvoi d'angle comportant une articulation de type joint de cardan (9) pour permettre la transmission du couple de pivotement entre la direction et l'arbre de pivotement quelle que soit l'inclinaison de l'arbre de pivotement (5). Notons que le dispositif de transmission et de renvoi d'angle est de manière connue en soi de type à vis sans fin (50). Ainsi, l'articulation (9) permet l'inclinaison de l'arbre de pivotement (5) d'un angle (A) dans le plan du châssis (2) grâce à un mouvement de rotation de l'arbre (5) autour de l'axe transversal (YY') et constitue ainsi en partie les moyens d'inclinaison (MI) de l'arbre de pivotement (5).

Selon ce premier mode de réalisation, la transmission du couple de pivotement entre la colonne de direction (7) du châssis (2) et le train avant (4) solidaires de l'arbre de pivotement (5) s'effectue par l'intermédiaire de l'articulation (9) et du dispositif à vis sans fin (50) sollicités par la direction (7). Notons que l'arbre de pivotement (5) est avantageusement monté libre en rotation dans un palier de renvoi (12) porté par un bras de commande (13). Notons que ce palier de renvoi (12) est articulé en rotation directement sur le châssis (2) autour de l'axe de rotation transversal (YY') afin de permettre son pivotement et donc l'inclinaison de l'arbre de pivotement (5).

Le palier de renvoi (12) et son bras de commande (13) ainsi que l'articulation (9) forment en partie les moyens d'inclinaison (MI) qui permettent à l'arbre de pivotement (5) de s'incliner dans le plan du châssis vers l'avant (AV) sous l'impulsion des moyens de commande (MC).

Les moyens de commande (MC) comportent un ou plusieurs vérins (6) destinés à actionner les moyens d'inclinaison (MI). Le ou les vérins (6) sont disposés entre le châssis (2) proprement dit et le bras de commande (13) ou son palier de renvoi (12). Ils provoquent ainsi la rotation autour de l'axe transversal (YY') du palier de renvoi (12) par rapport au châssis (2) lorsqu'il(s) sont actionnés, et donc la rotation de l'arbre de pivotement (5) autour de l'articulation (9). le ou les vérins peuvent être de plusieurs types comme, par exemple, de type électrique ou pneumatique, voire hydraulique. Toutefois, il est important de noter que le ou les vérins (6) doivent permettre à la variation de l'angle d'inclinaison (A) de l'arbre (5) de s'effectuer rapidement et de manière très précise. De plus, le ou les vérins (6) doivent être capable de se positionner dans n'importe quelle position entre ses deux positions extrêmes, ainsi les moyens d'inclinaison (MI) et les moyens de commande (MC) permettent un réglage continu de l'angle d'inclinaison (A) de l'arbre de pivotement (5).

Par ailleurs, il peut être prévu un dispositif de sécurité non représenté destiné à limiter la vitesse du véhicule en cas de fonctionnement défectueux du vérin. Ce dispositif peut agir directement sur l'accélérateur afin d'en limiter sa course et constitue ainsi une butée d'accélérateur qui est mise en oeuvre lors d'une panne de vérin.

Selon l'invention, l'angle d'inclinaison (A) déterminé par les moyens d'adaptation varie avec la vitesse de déplacement du véhicule de manière à augmenter lorsque la vitesse augmente et inversement. Ainsi, à basse vitesse, l'angle (A) est faible, voire nul, et le pivotement du train avant (4) par rapport au châssis (2) s'effectue dans un plan sensiblement horizontal et parallèle au sol, comme le montrent les figures 1 et 2, tandis qu'à vitesse élevée, l'angle d'inclinaison augmente et le pivotement respectif du train avant (4) et du châssis (2) s'effectue dans un plan incliné par rapport au sol, tel qu'illustré figures 3 et 4, provoquant de ce fait l'inclinaison du châssis (2) vers l'intérieur du virage à l'encontre de la force centrifuge lorsque l'utilisateur actionne la direction (7) à l'aide de l'organe de guidage (8).

Il va de soi que d'autres facteurs liés au véhicule ou à ses conditions d'utilisation pourraient être pris en compte pour le calcul par les moyens d'adaptation de l'angle d'inclinaison (A) tel que l'accélération, le poids ou la charge du véhicule ou la raideur de ses amortisseurs, par exemple, sans pour autant sortir du champ de protection de l'invention. Ces facteurs pourraient être pris en compte pour affiner le calcul de l'angle d'inclinaison (A), cependant leur importance doit rester minime par rapport au facteur principal qui permet la détermination de l'angle d'inclinaison (A), à savoir la vitesse du véhicule.

Les moyens d'adaptation qui commandent l'angle d'inclinaison (A) peuvent être de tous types tels que mécanique par exemple, ils peuvent avantageusement comporter des moyens de calcul et de programmation de type informatique afin de permettre la prise en compte des différents paramètres pour la détermination de l'angle optimum. Ces moyens de calcul informatique peuvent ainsi être programmés de manière à permettre à l'utilisateur de choisir le mode de fonctionnement de son véhicule entre différents modes préprogrammés tel qu'un mode actif avec un dispositif d'inclinaison fortement actif ou des modes classiques où l'action du dispositif d'inclinaison est plus ou moins atténué ou diminué par rapport au mode actif, par exemple.

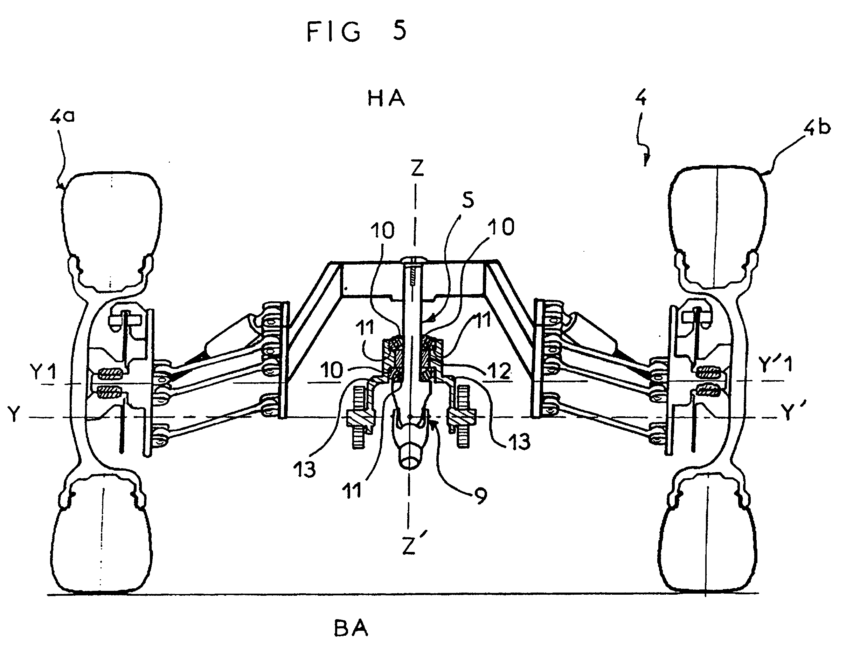

Notons que, selon un deuxième mode de réalisation illustré figure 5, l'axe de rotation transversal (YY') autour duquel s'incline l'arbre de pivotement (5) n'est plus aligné ou confondu avec l'axe de rotation propre (Y1Y'1) des roues (4a, 4b) du train (4) mais est décalé par rapport à celui-ci. Il peut avantageusement être disposé en dessous de l'axe de rotation propre (Y1Y'1). Ainsi, lors du pivotement de l'arbre de pivotement (5) autour de l'axe de rotation (YY'), le châssis subit un déplacement respectivement par rapport au train avant (4).

Selon les modes de réalisations illustrés figures 1 à 5, le véhicule (1) est muni d'un dispositif de motorisation (14) destiné à le mouvoir. Le dispositif de motorisation est avantageusement formé d'un moteur dont la cylindrée peut avantageusement être comprise entre 250 cm³ et 500 cm³. Toutefois, il pourrait en être autrement et le moteur utilisé pourrait développer une puissance plus importante ou inférieure ou être d'un autre type tel qu'un moteur électrique; par exemple, sans pour autant sortir du champ de protection de l'invention.

Selon les modes de réalisation illustrés figures 1 à 5, le véhicule (1) est un tricycle comportant une roue arrière motrice (15) et un train avant (4) avec deux roues directrices (4a, 4b). Il va de soi que l'on pourrait imaginer un véhicule similaire possédant à l'arrière un train arrière avec au moins deux roues propulsives et comportant un dispositif d'inclinaison identique sur l'ensemble de direction avant. Selon cette variante d'exécution, le châssis est alors monté sur le train arrière de manière à pouvoir pivoter autour d'un axe longitudinal disposé sensiblement horizontalement pour permettre au châssis de s'incliner vers l'intérieur du virage à l'encontre de la force centrifuge. Notons que le pivotement entre le châssis et l'essieu arrière autour de cet axe longitudinal horizontal peut s'effectuer librement, indépendamment de la suspension par exemple. De fait, il va de soi que l'on ne sortirait pas du champs de protection de l'invention en réalisant un véhicule à quatre roues plutôt qu'un véhicule de type tricycle tel qu'illustré figure 1 à 5

L'ensemble moteur (14) est monté à l'arrière du véhicule de manière à entraîner la ou les roues arrières (15) qui forment les roues motrices du véhicule ; il peut être équipé en sortie d'une boîte de vitesse, par exemple. De plus, le châssis porteur (2) peut être caréné et comporter un habillage similaire à celui d'une voiture. Il va de soi que les roues directrices (4a, 4b) du train avant (4) pourraient également être les roues motrices du véhicule, sans pour autant sortir du champ de protection de l'invention.

Notons que, selon une variante d'exécution non représentée, l'ensemble de direction se situe à l'arrière du véhicule et son arbre de pivotement est susceptible de s'incliner vers le haut et vers l'arrière, l'ensemble moteur pouvant alors être disposé à l'avant pour agir sur les roues avant du véhicule.

Selon une autre variante, le véhicule présente deux ensembles de direction qui coopèrent pour guider le véhicule, un ensemble de direction avant ainsi qu'un ensemble de direction arrière, chacun desdits ensembles de direction étant du type de celui décrit dans le mode de réalisation préféré du véhicule de l'invention. Ainsi, les arbres de pivotement avant et arrière peuvent s'incliner respectivement vers le haut et l'avant et vers le haut et l'arrière. Notons que les moyens d'inclinaison et les moyens de commande associés des arbres avant et arrière permettent de lier le pivotement desdits arbres, l'inclinaison de l'arbre avant étant étroitement liée à l'inclinaison de l'arbre arrière, et ce, en fonction de la vitesse du véhicule qui constitue le paramètre technique essentiel nécessaire aux moyens d'adaptation des moyens de commande pour déterminer les angles d'inclinaison avant et arrière optimum. Ainsi, le fonctionnement des moyens d'inclinaison respectifs des ensembles de direction avant et arrière peut s 'effectuer de manière synchrone ou de manière asynchrone ou opposée par exemple.

Il va de soi que le pivotement de l'arbre ou des arbres de pivotement autour de leur axe de rotation transversal s'effectue de manière continue et permanente pendant le déplacement du véhicule de manière à adapter la maniabilité du véhicule à sa vitesse.

Par ailleurs, il est important de noter que les moyens d'inclinaison de l'arbre de pivotement agissent non seulement sur l'arbre proprement dit mais également sur les ensembles de suspension du train avant, ils permettent ainsi la modification de leur comportement en fonction de l'angle d'inclinaison (A) de l'arbre et donc de la vitesse du véhicule. Lorsque l'arbre s'incline vers l'avant, le train avant et ses suspensions pivote également autour de l'axe transversal (YY') comme l'illustre les figures 2 et 4 et on obtient ainsi une rigidification de la suspension avant du véhicule.

Selon des variantes des modes de réalisation décrits, le vérin destiné à gérer l'inclinaison de l'axe (ZZ') peut être remplacé par tout système équivalent comme ceux utilisant des bielles, des cames ou des systèmes de vis sans fin par exemple afin de permettre le réglage de l'angle d'inclinaison de l'arbre (5).

De plus, selon d'autres variantes, la liaison entre l'arbre (5) et la direction (7) pourrait ne pas être obtenue à l'aide d'une articulation de type cardan. L'arbre pourrait de ce fait être libre à son extrémité inférieure et la transmission du couple de pivotement à l'arbre s'effectuerait par des moyens de transmission déportés comme par exemple des moyens utilisant des câbles ou des courroies.

Bien entendu, l'invention n'est pas limitée aux modes de réalisation décrits et représentés à titre d'exemples, mais elle comprend aussi tous les équivalents techniques ainsi que leurs combinaisons.

## Revendications

1. Véhicule (1), du type comportant un châssis porteur (2) articulé autour d'un axe de rotation (ZZ') sur un ensemble de direction (3) comportant au moins deux roues directrices (4a, 4b), le véhicule étant un tricycle comportant une roue arrière (15) et un train avant (4) avec les deux roues directrices (4a, 4b), et l'axe de rotation (ZZ') étant formé par un arbre de pivotement (5) solidaire de l'ensemble de direction (3), **caractérisé en ce que** le véhicule comporte des moyens d'inclinaison (MI) qui permettent l'inclinaison de l'axe de rotation (ZZ'), ces moyens d'inclinaison (MI) comprennant une articulation (9) qui permet le pivotement de l'arbre (5) par rapport au châssis (2) autour d'un axe de rotation transversal (YY'), les moyens d'inclinaison (MI) comportant des moyens de commande (MC) qui permettent de commander l'inclinaison de l'axe de rotation (ZZ'), c'est-à-dire l'angle (A) que l'axe de rotation (ZZ') présente avec la verticale.

2. Véhicule (1) selon la revendication 1, **caractérisé en ce que** les moyens de commande (MC) sont constitués par au moins un vérin (6) disposé entre le châssis (2) et le bras de commande (13) ou son palier de renvoi (12).

3. Véhicule (1) selon la revendication 2, **caractérisé en ce** les moyens de commande (MC) comportent des moyens d'adaptation destinés à déterminer l'angle d'inclinaison (A) optimum de l'axe de rotation (ZZ') en fonction des paramètres techniques du véhicule et/ou de son environnement.

4. Véhicule (1) selon la revendication 3, **caractérisé en ce que** l'angle d'inclinaison (A) de l'axe de rotation (ZZ') par rapport à la verticale est déterminé par les moyens d'adaptation en fonction de la vitesse du véhicule (1), l'angle d'inclinaison (A) augmentant lorsque la vitesse du véhicule (1) augmente.

5. Véhicule (1) selon l'une quelconque des revendications précédentes, **caractérisé en ce que** les moyens d'inclinaison (MI) permettent l'inclinaison de l'axe de rotation (ZZ') vers le haut (HA) et vers l'avant (AV) si l'ensemble de direction (3) est disposé à l'avant et vers le haut (HA), et vers l'arrière (AR), si l'ensemble de direction (3) est disposé à l'arrière.

6. Véhicule (1) selon l'une quelconque des revendications précédentes, **caractérisé en ce que** les moyens d'inclinaison (MI) permettent l'inclinaison de l'axe de rotation (ZZ') pendant le déplacement du véhicule.

7. Véhicule (1) selon l'une quelconque des revendications précédentes, **caractérisé en ce que** l'axe de rotation (ZZ') est formé par un arbre de pivotement (5) solidaire de l'ensemble de direction (3) et **en ce que** les moyens d'inclinaison (MI) comportent un palier de renvoi (12) dans lequel pivote l'arbre de pivotement (5), ledit palier étant porté par un bras de commande (13) articulé en rotation sur le châssis porteur (2) autour de l'axe de rotation transversal (YY').

8. Véhicule (1) selon la revendication 2 ou 5, **caractérisé en ce qu'**il comporte un organe de guidage (8) qui commande en rotation une colonne de direction (7) articulée sur l'arbre de pivotement (5) par l'articulation (9) de manière à pouvoir lui transmettre un couple de pivotement par rapport au châssis (2).

## Patentansprüche

1. Fahrzeug (1), vom Typ mit einem tragenden Fahrgestell (2), welches um eine Rotationsachse (ZZ') an einer Führungsvorrichtung (3) verschwenkbar ist, welche wenigstens zwei richtungsführende Räder (4a, 4b) aufweist, wobei das Fahrzeug ein Dreirad ist mit einem Hinterrad (15) und einem Frontfahrgestell (4) mit den zwei richtungsführenden Rädern (4a, 4b) und die Rotationsachse (ZZ') durch eine Drehgelenkachse (5) einstückig mit der Führungsvorrichtung (3) gebildet ist, **dadurch gekennzeichnet, dass** das Fahrzeug Neigungsmittel (MI) aufweist, die eine Neigung der Rotationsachse (ZZ') ermöglichen, wobei die Neigungsmittel (MI) ein Gelenk (9) aufweisen, welches ein Schwenken der Achse (5) bezüglich des Fahrgestells (2) um eine transversale Rotationsachse (YY') ermöglicht, wobei die Neigungsmittel (MI) Steuermittel (MC) umfassen, die ein Steuern der Neigung der Rotationsachse (ZZ'), d.h. des Winkels (A) der Rotationsachse (ZZ') bezüglich der Vertikalen, ermöglichen.

2. Fahrzeug (1) gemäß Anspruch 1, **dadurch gekennzeichnet, dass** die Steuermittel (MC) von wenigstens einem Stellantrieb (6) gebildet sind, der zwischen dem Fahrgestell (2) und dem Steuerarm (13) oder dem Getriebelager (12) angeordnet sind.

3. Fahrzeug (1) gemäß Anspruch 2, **dadurch gekennzeichnet, dass** die Steuermittel (MC) Mittel zur Anpassung umfassen, die dafür vorgesehen sind, den optimalen Neigungswinkel (A) der Rotationsachse (ZZ') als Funktion der technischen Parameter des Fahrzeugs und/oder seiner Umgebung zu bestimmen.

4. Fahrzeug (1) gemäß Anspruch 3, **dadurch gekennzeichnet, dass** der Neigungswinkel (A) der Rotationsachse (ZZ') in Bezug auf die Vertikale über die Mittel zur Anpassung als Funktion der Geschwindigkeit des Fahrzeugs (1) bestimmt ist, wobei der Neigungswinkel (A) zunimmt, wenn die Geschwindigkeit des Fahrzeugs (1) zunimmt.

5. Fahrzeug (1) gemäß einem der vorhergehenden Ansprüche, **dadurch gekennzeichnet, dass** die Neigungsmittel (MI) die Neigung der Rotationsachse (ZZ') in Richtung zur Höhe (HA) und in Richtung zur Vorderseite (AV) ermöglichen, wenn die Führungsvorrichtung (3) an der Vorderseite angeordnet ist und in Richtung zur Höhe (HA) und zur Rückseite (AR), wenn die Führungsvorrichtung (3) an der Rückseite angeordnet ist.

6. Fahrzeug (1) gemäß einem der vorhergehenden Ansprüche, **dadurch gekennzeichnet, dass** die Neigungsmittel (MI) die Neigung der Rotationsachse (ZZ') während der Bewegung des Autos ermöglichen.

7. Fahrzeug (1) gemäß einem der vorhergehenden Ansprüche, **dadurch gekennzeichnet, dass** die Rotationsachse (ZZ') durch eine Drehgelenkachse (5), einstückig mit der Führungsvorrichtung (3), gebildet ist und dass die Neigungsmittel (MI) ein Getriebelager (12) aufweisen, an dem sich die Drehgelenkachse (5) dreht, wobei das Lager von einem Steuerarm (13) getragen wird, der durch die Rotation an dem Fahrgestell (2) um die transversale Rotationsachse (YY') verschwenkt wird.

8. Fahrzeug (1) gemäß Anspruch 2 oder 5, **dadurch gekennzeichnet, dass** es ein Lenkmittel (8) umfasst, welches die Rotation einer Lenksäule (7) steuert, die an der Drehgelenksachse (5) mittels eines Gelenks (9) angelenkt ist derart, dass mit ihr ein Verschwenkmoment auf das Fahrgestell (2) übertragbar ist.

## Claims

1. Vehicle (1) of the type comprising a support chassis (2) which is articulated around an axis of rotation (ZZ') on a steering assembly (3) comprising at least two guiding wheels (4a, 4b), the vehicle being a tricycle comprising a rear wheel (15) and a front axle (4) with the two guiding wheels (4a, 4b), and the axis of rotation (ZZ') being formed by a pivoting shaft (5) which is integral with the steering assembly (3), **characterised in that** the vehicle comprises means for inclination (MI) which permit inclination of the axis of rotation (ZZ'), these means for inclination (MI) comprising an articulation (9) which permits pivoting of the shaft (5) relative to the chassis (2) around a transverse axis of rotation (YY'), the means for inclination (MI) comprising means for control (MC) which make it possible to control the inclination of the axis of rotation (ZZ'), i.e. the angle (A) which the axis of rotation (ZZ') has relative to the vertical.

2. Vehicle (1) according to claim 1, **characterised in that** the means for control (MC) consist of at least one jack (6) which is disposed between the chassis (2) and the control arm (13) or its return bearing (12).

3. Vehicle (1) according to claim 2, **characterised in that** the means for control (MC) comprise means for adaptation which are designed to determine the optimum angle of inclination (A) of the axis of rotation (ZZ') according to technical parameters of the vehicle and/or its environment.

4. Vehicle (1) according to claim 3, **characterised in that** the angle of inclination (A) of the axis of rotation (ZZ') relative to the vertical is determined by means for adaptation according to the speed of the vehicle (1), the angle of inclination (A) increasing when the speed of the vehicle (1) increases.

5. Vehicle (1) according to any one of the preceding claims, **characterised in that** the means for inclination (MI) permit inclination of the axis of rotation (ZZ') upwards (HA) and forwards (AV) if the steering assembly (3) is disposed forwards and upwards (HA), and rearwards (AR), if the steering assembly (3) is disposed rearwards.

6. Vehicle (1) according to any one of the preceding claims, **characterised in that** the means for inclination (MI) permit inclination of the axis of rotation (ZZ') during travel of the vehicle.

7. Vehicle (1) according to any one of the preceding claims, **characterised in that** the axis of rotation (ZZ') is formed by a pivoting shaft (5) which is integral with the steering assembly (3) and **in that** the means for inclination (MI) comprise a return bearing (12) in which the pivoting shaft (5) pivots, the said bearing being supported by a control arm (13) which is articulated in rotation on the support chassis (2) around the transverse axis of rotation (YY').

8. Vehicle (1) according to claim 2 or claim 5, **characterised in that** it comprises a steering unit (8) which rotates a steering column (7) which is articulated on the pivoting shaft (5) by the articulation (9), such as to be able to transmit to the latter pivoting torque relative to the chassis (2).
